# EUROPÄISCHE PATENTSCHRIFT

(11) **EP 0 628 523 B1**
(45) Veröffentlichungstag und Bekanntmachung des Hinweises auf die Patenterteilung: **30.07.1997**
(21) Anmeldenummer: 94107877.6
(22) Anmeldetag: 21.05.1994
(51) Int. Cl.: C04B 28/18, E04B 5/02

(54) **Verfahren zur Herstellung von Wärmedämmaterial**
Method of making a heat-insulating material
Procédé de fabrication d'un matériau d'isolation thermique

(30) Priorität: 08.06.1993 DE 4318874; 16.11.1993 DE 4339137
(43) Veröffentlichungstag der Anmeldung: 14.12.1994
(73) Patentinhaber: SICOWA Verfahrenstechnik für Baustoffe GmbH & Co. KG, D-52072 Aachen (DE)
(72) Erfinder: Engert, Hanns-Jörg, Dipl.-Ing., D-52072 Aachen (DE); Koslowski, Thomas, Dr.-Ing., D-52072 Aachen (DE)
(74) Vertreter: Sparing - Röhl - Henseler Patentanwälte

(56) Entgegenhaltungen:
- EP-A- 0 038 552
- EP-A- 0 151 452
- EP-A- 0 263 436
- FR-A- 1 601 953
- GB-A- 889 763
- GB-A- 2 166 428
- CHEMICAL ABSTRACTS, vol. 111, no. 2, 10. Juli 1989, Columbus, Ohio, US; abstract no. 11773r, S. MITSUTA ET AL 'Manufacture of lightweight panel' Seite 286

## Beschreibung

Die Erfindung betrifft ein Verfahren zur Herstellung von Wärmedämmaterial aus silikathaltigem Material, Kalkhydrat, Wasser, Schaum und einem reaktive Aluminate enthaltenden Schnellzement, woraus eine gießfähige Rohmischung hergestellt wird, die in Formen gegossen wird, wobei die in den Formen gebildeten Rohlinge nach genügender Verfestigung entformt und autoklaviert werden.

Aus der EP-B-0 038 552 ist ein Verfahren zur Herstellung von blockförmigen Wandbaustoffen auf Kalksilikatbasis bekannt, bei dem eine gießfähige Rohmischung im wesentlichen aus einem körnigen silikathaltigen Material wie Quarzsand, Kalk bzw. Kalkhydrat, Wasser, Schnellzement und Schaum hergestellt und in Formen gegossen wird. Der Schnellzement ist hierbei derart eingestellt, daß die Rohmischung eine genügende Vorhaltzeit aufweist, während der praktisch keine festigkeitsbildenden Reaktionen stattfinden. Letztere werden im wesentlichen erst durch Wärmeeinwirkung, die in der Form erfolgt, ausgelöst, damit der Rohling beim Entschalen eine genügende Festigkeit zum Entschalen und Transportieren aufweist. Der Rohling wird anschließend autoklavgehärtet. Dieses Verfahren eignet sich hauptsächlich zur Herstellung von Steinen oder Blöcken mit relativ niedriger Rohdichte in der Größenordnung von etwa 300 bis 500 kg/m³, jedoch sind niedrigere Rohdichten, wie es für Materialien, die praktisch nur zur Wärmedämmung verwendet werden, ohne daß sie tragende Funktionen erfüllen müssen, nicht erzielbar, weil bei sehr niedrigen Rohdichten in der Rohmischung Entmischungsprobleme auftreten, die sich ohne zusätzliche Maßnahmen nicht beherrschen lassen.

Auch mittels der Porenbetontechnologie, bei der Gasblasen in einer Rohmischung durch die Reaktion von pulverförmig beigefügtem Aluminium mit dem in der Rohmischung aus CaO entstehenden Kalkhydrat gebildet werden, um eine Porenstruktur in der Rohmischung zu erzeugen, ist nicht zur Herstellung von Materialen mit Rohdichten kleiner 300 kg/m³ geeignet, da hier der Gasdruck in den Poren durch die beim Löschen von CaO entstehende Wärme so groß würde, daß er das Rohmaterial auseinanderreißen würde.

Aus der EP-B-0 211 365 ist ein Schnellzement bekannt, der 6 bis 75 Gew.-Teile reaktive Calciumsilikate, 9 bis 60 Gew.-% reaktive Aluminate, berechnet als CA, 0,5 bis 14 Gew.-Teile Calciumsulfathalbhydrat und/oder -anhydrit-III, 2 bis 46 Gew.-Teile Calciumsulfatanhydrit-II, 3 bis 20 Gew.-Teile Calciumhydroxid und 0,2 bis 3,5 Gew.-Teile eines organischen, die Keimbildung und das Wachstum von Calciumaluminatsulfathydrat hemmenden Abbindeverzögerers (beispielsweise Zitronensäuremonohydrat) enthält, wobei die Reaktionskette über folgende Reaktionsprodukte abläuft: Primärettringit, Monophasen (Calciumaluminatmonosulfat), Sekundärettringit und Calciumhydrosilikat. Hierbei wird eine Verzögerung des Erstarrungsbeginns der reaktiven Calciumsilikate und Aluminate erreicht, die eine genügende Verarbeitungszeit beläßt, und nach der Verzögerung ein beschleunigtes Erstarren der reaktiven Calciumsilikate und Aluminate (zunächst über Monophasenbildung, dann über Sekundärettringitbildung) erzielt. Ein derartiger Schnellzement läßt sich bei der Herstellung silikatgebundener Wandbaustoffe verwenden.

Aufgabe der Erfindung ist es, ein Verfahren der eingangs genannten Art zu schaffen, das es ermöglicht, ein Wärmedämmaterial mit einer sehr geringen Rohdichte unter 250 kg/m³ herzustellen.

Diese Aufgabe wird dadurch gelöst, daß als silikathaltiges Material ein Quarzmehl mit einer spezifischen Oberfläche nach BET von mindestens etwa 3 m²/g, insbesondere etwa 4 bis 5 m²/g, verwendet, die Rohmischung in Abhängigkeit von der Gesamtoberfläche der Feststoffe mit einem Gewichtsverhältnis von Wasser/Feststoff (ohne Schaum) von mindestens etwa 1,25 bis etwa 1,85 und einer in bezug auf den praktisch vollständigen Umsatz des Quarzmehls und der reaktiven Aluminate im wesentlichen stöchiometrischen Menge an Kalkhydrat mit einer Oberfläche nach BET von mindestens etwa 15 m²/g hergestellt wird und die in Formen gegossenen Rohlinge nach genügender Verfestigung bis auf einen Formboden entformt und auf dem Formboden befindlich autoklaviert werden.

Hierbei wird ein Quarzmehl mit einer spezifischen Oberfläche nach BET von mindestens 3 m²/g, insbesondere etwa 4 bis 5 m²/g, (nach Blaine mindestens etwa 10000 cm²/g, insbesondere 12000 bis 14000 cm²/g) verwendet, wobei dieses Quarzmehl insbesondere eine maximale Korngröße von etwa 20 µm, vorzugsweise etwa 10 µm aufweist und insbesondere eine mittlere Korngröße von etwa 2 bis 3 µm besitzt.

Kalkhydrat wird in einer Menge eingesetzt, die im wesentlichen stöchiometrisch zu der zur vollständigen Umsetzung des Quarzmehls zu Tobermorit (C₅S₆H₅) und von den im Schnellzement enthaltenen reaktiven Aluminaten zu Monophasen und (Sekundär-)Ettringit benötigten Menge ist. Das Gewichtsverhältnis von Kalkhydrat zu Quarzmehl liegt insbesondere etwa zwischen 1,1 bis 1,4. Hierbei wird Kalkhydrat mit einer spezifischen Oberfläche nach BET von mindestens etwa 15 m²/g verwendet. Zweckmäßig ist beispielsweise ein Kalkhydrat mit einer spezifischen Oberfläche nach BET von etwa 17 bis 20 m²/g und einer mittleren Korngröße von etwa 4 bis 5 µm. Man kann aber auch wesentlich feineres Kalkhydrat beispielsweise mit einer BET-Oberfläche größer 35 m²/g vorzugsweise zusammen mit ebenfalls sehr feinem Quarzmehl einsetzen.

Bei Verwendung eines Schnellzements auf der Basis von Tonerdezement (etwa zusammen mit Anhydrit-II, Stuckgips und Zitronensäure) wird vorzugsweise ein Gewichtsverhältnis von Kalkhydrat zu Quarzmehl von etwa 1,2 verwendet. Hierdurch wird ein praktisch vollständiger Stoffumsatz von Quarz und Kalkhydrat zu Tobermorit bei der Dampfhärtung im Autoklaven erreicht.

Das Kalkhydrat liefert in der Rohmischung wegen seines hohen Mengenanteils und seiner hohen spezifischen Oberfläche einen wesentlichen Anteil von mindestens etwa 10¹⁰ cm² pro m³ Rohmasse an der Gesamtoberfläche der in der Rohmischung eingesetzten Feststoffe. Die Gesamtoberfläche der Feststoffe der Rohmischung ist daher im allgemeinen grösser als ca. > 1 x 10⁸ cm² pro (kg.m³) Rohmasse.

Zunächst wird aus einem derartigen Quarzmehl, Kalkhydrat, und Wasser eine Wasser/Feststoff-Suspension mit einem Gewichtsverhältnis von Wasser zu Feststoff von mindestens 1,25 in Abhängigkeit vom Wasseranspruch der Einsatzstoffe, der mit deren Feinheit zunimmt, bis etwa 1,85 hergestellt. Diese Suspension wird mit einem vorgefertigten Schaum porosiert. Die Zugabe und das Untermischen einer separat angemischten Schnellzementsuspension (etwa entsprechend der EP-B-0 211 365) erfolgt zweckmäßigerweise nach dem Untermischen des Schaums. Die Menge an verwendetem Schnellzement beträgt vorzugsweise etwa 15 bis 25 Masse-% des gesamten Feststoffanteils.

Die so hergestellte Rohmischung bildet trotz des sehr geringen Feststoffanteils überraschenderweise eine homogene stabile Suspension während einer Zeit, die zur Verfestigung durch den Schnellzement notwendig ist. Deshalb kann die Rohmischung in Formen gegossen und die in die Formen gegossenen Rohlinge können nach genügender Verfestigung (wenn die Monophasenbildung des Schnellzements im wesentlichen abgeschlossen ist, dies kann beispielsweise nach ca. 30 min der Fall sein) bis auf den Formboden entformt werden. Die Rohlinge werden dann zweckmäßigerweise beispielsweise während ca. 6 h vorgelagert und dann weiterhin auf dem Formboden befindlich in einen Autoklaven eingeführt und dort dampfgehärtet, da sie ohne Verbleiben auf dem Formboden für eine Handhabung zu fragil sind. Anschließend können die dampfgehärteten Blöcke, soweit sie noch nicht das gewünschte Format aufweisen, entsprechend z.B. in Plattenform geschnitten werden. Schließlich wird das autoklavierte Material getrocknet.

Die Rohmischung besteht im wesentlichen aus einer Schaummatrix eines Kugelschaums, wobei die Stegdicke im schmalsten Bereich der Stege zwischen den Schaumbläschen wenige µm beträgt, d.h. in der Größenordnung der mittleren Korngröße des Quarzmehls liegt oder kleiner ist. Die Zwikkelräume zwischen den Schaumbläschen sind hierbei mit einer feststoffarmen Wasser/Feststoff-Suspension gefüllt. Dies ist wegen der geforderten Kornfeinheit möglich. Das Abfließen dieser Suspension wird durch die extrem geringe Stegdicke zwischen den Schaumbläschen erschwert. Der Schaumanteil der Rohmischung ist hierbei für deren Stabilität wesentlich verantwortlich.

Als Schaum kann allgemein ein Tensid- oder Proteinschaum oder eine Mischung hiervon eingesetzt werden, wobei ein eine zellige Porenstruktur aufweisender Proteinschaum bevorzugt wird. Eine Schaumrohdichte im Bereich von etwa 60 bis 80 kg/m³ kann verwendet werden. Ein mittlerer Porendurchmesser des Schaums im Bereich von etwa 50 bis 300 µm ist zweckmäßig. Mittels einer Schaumkanone läßt sich ein sehr feinporiger, steifer und bei Umgebungstemperatur relativ dauerhafter Schaum erzeugen, der im Falle eines Proteinschaums polyederförmig ist, während die Stegdicken zwischen den Schaumbläschen minimal sind. Die polyedrische Schaumstruktur des Proteinschaums ändert sich beim Untermischen des Schaums unter die Wasser-Feststoff-Suspension in eine Kugelstruktur, was sich günstig auf die Stabilität der Rohmischung auswirkt.

Die Verwendung eines Proteinschaums führt im Vergleich zur Verwendung von Schäumen aus Tensiden zu erhöhten Endfestigkeiten der hergestellten Produkte.

Das Verhältnis von Wasser zu Feststoff (idealerweise 1,39) und Wasser zu Schaum wird zweckmäßigerweise derart gewählt, daß sich die benötigte hohe Schaummenge leicht und schonend untermischen läßt und die Rohmischung gerade noch fließfähig und selbstnivellierend ist. Zu hohe Verhältnisse können zu einem Sedimentieren der Feststoffe, geringerer Rohlingsfestigkeit und geringerer Autoklavierbeständigkeit führen, während zu geringe Verhältnisse die Fließfähigkeit und das Untermischen des Schaums beeinträchtigen.

Vorteilhaft ist der Zusatz eines Stabilisators wie pyrogene Kieselsäure insbesondere in einer Menge bis etwa 0,2 Gew.-% der Rohmischung. Hierdurch kann die Menge an Schnellzement herabgesetzt werden.

In der Rohmischung füllen die Feststoffpartikel offenbar die Zwischenräume zwischen den Schaumbläschen derart aus, daß sich trotz des sehr niedrigen Feststoffgehaltes in der Größenordnung von etwa 5 Vol.-% ein pseudoplastisches Verhalten - möglicherweise aufgrund eines nichtNewton'schen Fließverhaltens - ergibt.

Beim Autoklavieren ist es zweckmäßig, den Autoklaven zunächst beispielsweise bis auf 0,4 bar zu evakuieren. Hierdurch wird der Temperaturgradient im Rohling beim nachfolgenden Aufheizen geringer und das Aufheizen beschleunigt. Zweckmäßig ist es auch, die Aufheizphase für die im Autoklaven befindlichen Rohlinge derart zu steuern, daß sich ein möglichst flacher Temperaturgradient von der Außenseite der Rohlinge zum Inneren ergibt, indem insbesondere die Aufheizphase unter Verwendung einer mindestens zweistufigen Aufheizrampe durchgeführt wird.

Im hergestellten Wärmedämmaterial wird eine Gesamtporosität im allgemeinen > 90 Vol.-% bis zu etwa 96 Vol.-% abhängig vom der Zielrohdichte des Wärmedämmaterials erreicht.

Zur Herstellung von Wärmedämmplatten können beispielhaft folgende Bestandteile zur Herstellung von zwei unterschiedlichen Rohmischungen für eine Zielrohdichte von 130 kg/m³ bzw. 150 kg/m³ verwendet werden:

| | | |
|---|---|---|
| Wasser (20°C) | 170 kg (17 Vol.-%) | 193,21 kg (19,3 Vol.-%) |
| Proteinschaum (Schaumbildner SB 3 der Fa. Heidelberger Zement, Addimentwerk, Leimen (Deutschland), Schaumrohdichte 70 kg/m³, mittlere Porengröße etwa 300 µm) | 55,75 kg (78,1 Vol.-%) | 53,67 kg (75,1 Vol.-%) |
| Stabilisator | 0,232 kg | 0,232 kg |
| Quarzmehl (spez. Oberfläche nach BET etwa 4 m²/g, mittlere Korngröße 3 µm, maximale Korngröße 10 µm) | 45,45 kg (1,72 Vol.-%) | 52,44 kg (1,98 Vol.-%) |
| Kalkhydrat (spez. Oberfläche nach BET etwa 18 m²/g, mittlere Korngröße 5 µm) | 54,61 kg (2,44 Vol.-%) | 63,06 kg (2,82 Vol.-%) |
| Schnellzement | 23,57 kg (0,782 Vol.-%) | 23,57 kg (0,782 Vol.-%) |

Hierbei hat der Schnellzement folgende Zusammensetzung:

| | |
|---|---|
| Tonerdezement | 14,86 kg |
| Calciumsulfatanhydrit-II | 8,0 kg |
| Calciumsulfathalbhydrat (Stuckgips) | 0,48 kg |
| Zitronensäuremonohydrat | 0,23 kg |

Hierdurch ergibt sich ein Volumenverhältnis von Wasser zu Feststoff von 3,44 bzw. 3,46. Die Gesamtoberfläche der Rohstoffe pro m³ Rohmasse beträgt hierbei etwa 1,3 x 10¹⁰ cm² bzw. etwa 1,5 x 10¹⁰ cm², wobei ca. 1 x 10¹⁰ cm² bzw. 1,2 x 10¹⁰ cm² durch das Kalkhydrat geliefert werden.

Ca. 30 min nach Einfüllen der Rohmischung in Formen einer Größe von 1 m x 1 m x 40 cm werden die Rohlinge entschalt, verbleiben aber auf dem Formboden. Nach einer Vorlagerungszeit von ca. 6 h werden sie in einen Autoklaven verbraucht, der zunächst auf 0,4 bar evakuiert wird. Danach erfolgt ein langsames Aufheizen (entsprechend der Sattdampfkurve) während 2 h bis auf 3 bar, ein stärkeres Aufheizen während 1,5 h bis auf 12 bar, anschließend während 0,5 h auf 13,9 bar, wonach sich eine Haltephase von 8 h bei etwa 14 bar (entsprechend etwa 198°C) und dann eine Abheizphase von 2 h anschließt. Schließlich werden die autoklavierten Blöcke nach ihrer Entnahme aus dem Autoklaven zu Platten mit Abmessungen von 1 m x 1 m x 5 cm geschnitten und auf einen Feuchtigkeitsgehalt von 10 Masse-% getrocknet.

## Patentansprüche

1. Verfahren zur Herstellung von Wärmedämmaterial aus silikathaltigem Material, Kalkhydrat, Wasser, Schaum und einem reaktive Aluminate enthaltenden Schnellzement, woraus eine gießfähige Rohmischung hergestellt wird, die in Formen gegossen wird, wobei die in den Formen gebildeten Rohlinge nach genügender Verfestigung entformt und autoklaviert werden, dadurch **gekennzeichnet,** daß als silikathaltiges Material ein Quarzmehl mit einer spezifischen Oberfläche nach BET von mindestens 3 m²/g, insbesondere etwa 4 bis 5 m²/g, verwendet, die Rohmischung in Abhängigkeit von der Gesamtoberfläche der Feststoffe mit einem Gewichtsverhältnis von Wasser/Feststoff (ohne Schaum) von mindestens 1,25 bis etwa 1,85 und einer in bezug auf den praktisch vollständigen Umsatz des Quarzmehls und der reaktiven Aluminate im wesentlichen stöchiometrischen Menge an Kalkhydrat mit einer Oberfläche nach BET von mindestens 15 m²/g hergestellt wird und die in Formen gegossenen Rohlinge nach genügender Verfestigung bis auf einen Formboden entformt und auf dem Formboden befindlich zu Formkörpern mit einer Dichte <250 kg/cm³ autoklaviert werden.

2. Verfahren nach Anspruch 1, dadurch gekennzeichnet, daß Quarzmehl mit einer maximalen Korngröße von 20 µm, insbesondere etwa 10 µm verwendet wird.

3. Verfahren nach Anspruch 1 oder 2, dadurch gekennzeichnet, daß Quarzmehl mit einer mittleren Korngröße von 2 bis 3 µm verwendet wird.

4. Verfahren nach einem der Ansprüche 1 bis 3, dadurch gekennzeichnet, daß Schnellzement in einer Menge von 15 bis 25 Gew.-% des Feststoffs eingesetzt wird.

5. Verfahren nach einem der Ansprüche 1 bis 4, dadurch gekennzeichnet, daß ein Verhältnis von Kalkhydrat zu Quarzmehl von 1,1 bis 1,4, vorzugsweise etwa 1,2, verwendet wird.

6. Verfahren nach einem der Ansprüche 1 bis 5, dadurch gekennzeichnet, daß als Schaum ein Tensidschaum oder insbesondere ein Proteinschaum verwendet wird.

7. Verfahren nach Anspruch 6, dadurch gekennzeichnet, daß eine Schaumrohdichte im Bereich von 60 bis 80 kg/m³ verwendet wird.

8. Verfahren nach Anspruch 6 oder 7, dadurch gekennzeichnet, daß ein Schaum mit einem mittleren Porendurchmesser von 50 bis 300 µm verwendet wird.

9. Verfahren nach einem der Ansprüche 1 bis 8, dadurch gekennzeichnet, daß der Rohmischung ein Stabilisator, vorzugsweise in einer Menge bis etwa 0,2 Gew.-% der Rohmischung, zugesetzt wird.

10. Verfahren nach einem der Ansprüche 1 bis 9, dadurch gekennzeichnet, daß der Autoklav vor dem Erhitzen evakuiert wird.

11. Verfahren nach einem der Ansprüche 1 bis 10, dadurch gekennzeichnet, daß die Aufheizphase für die im Autoklaven befindlichen Rohlinge derart gesteuert wird, daß sich ein möglichst flacher Temperaturgradient von der Außenseite der Rohlinge zu ihrem Inneren hin ergibt.

12. Verfahren nach Anspruch 11, dadurch gekennzeichnet, daß die Aufheizphase unter Verwendung einer mindestens zweistufigen Aufheizrampe durchgeführt wird.

13. Wärmedämmaterial aus einem eine Vielzahl von Poren aufweisenden calciumhydrosilikatgebundenen Gerüst, gekennzeichnet durch eine Rohdichte < 250 kg/m³, insbesondere < 180 kg/m³, und ein im wesentlichen aus Tobermorit bestehendes Gerüst, dessen Poren einen mittleren Porendurchmesser im Bereich von 50 bis 300 µm aufweisen.

14. Wärmedämmaterial nach Anspruch 13, dadurch gekennzeichnet, daß die minimale Stegstärke zwischen den Poren des Gerüsts überwiegend im Bereich zwischen 2 und 5 µm liegen.

15. Wärmedämmaterial nach Anspruch 13 oder 14, dadurch gekennzeichnet, daß eine Gesamtporosität > 90 Vol.-% vorhanden ist.

## Claims

1. Method of making a heat-insulating material from material containing silicate, calcium hydroxide, water, foam and a fast-setting cement containing reactive aluminates, from which is made a raw mixture capable of being poured, which is poured into moulds, the blanks formed in the moulds being released after sufficient solidification and autoclaved, characterised in that as the material containing silicate, a quartz powder with a specific surface according to BET of at least 3 m²/g, in particular approximately 4 to 5 m²/g, is used, the raw mixture being produced depending on the total surface of the solids with a weight ratio of water/solid (without foam) of at least 1.25 to approximately 1.85 and a substantially stoichiometric quantity of calcium hydroxide with respect to the practically complete transformation of the quartz powder and of the reactive aluminates, with a surface according to BET of at least 15 m²/g and the blanks cast in moulds are released after sufficient solidification apart from a mould base and are autoclaved located on the mould base as shaped members with a density of <250 kg/cm³.

2. Method according to Claim 1, characterised in that quartz powder with a maximum grain size of 20 µm, in particular approximately 10 µm is used.

3. Method according to Claim 1 or 2, characterised in that quartz powder with an average grain size of 2 to 3 µm is used.

4. Method according to one of Claims 1 to 3, characterised in that fast-setting cement is used in a quantity of 15 to 25 % by weight of the solid material.

5. Method according to one of Claims 1 to 4, characterised in that a ratio of calcium hydroxide to quartz powder of 1.1 to 1.4, preferably approximately 1.2 is used.

6. Method according to one of Claims 1 to 5, characterised in that a surface active foam or in particular a protein foam is used as the foam.

7. Method according to Claim 6, characterised in that a foam gross density in the region of 60 to 80 kg/m³ is used.

8. Method according to Claim 6 or 7, characterised in that a foam with an average pore diameter of 50 to 300 µm is used.

9. Method according to one of Claims 1 to 8, characterised in that a stabiliser, preferably in a quantity up to approximately 0.2 % by weight of the raw mixture, is added to the raw mixture.

10. Method according to one of Claims 1 to 9, characterised in that the autoclave is evacuated before heating.

11. Method according to one of Claims 1 to 10, characterised in that the heating-up phase for the blanks located in the autoclave is controlled so that the flattest possible temperature gradient from the outside of the blanks to their inside results.

12. Method according to Claim 11, characterised in that the heating-up phase is carried out using an at least two-stage heating-up ramp.

13. Heat-insulating material consisting of a structure bonded with calcium hydrosilicate comprising a plurality of pores, characterised by a gross density < 250 kg/m³, in particular < 180 kg/m³, and a structure consisting essentially of Tobermorite, whereof the pores have an average pore diameter in the range of 50 to 300 µm.

14. Heat-insulating material according to Claim 13, characterised in that the minimum web thickness between the pores of the structure is predominantly in the range of between 2 and 5 µm.

15. Heat-insulating material according to Claim 13 or 14, characterised in that a total porosity of > 90 Vol.-% exists.

## Revendications

1. Procédé de fabrication d'un matériau calorifuge à partir d'une matière contenant des silicates, composée d'hydrate de chaux, d'eau, de mousse et d'un ciment rapide contenant des aluminates réactifs, matière dont on fait un mélange cru, moulable, que l'on verse dans des moules, les pièces crues formées dans ces moules étant démoulées dès que leur solidification le permet et cuites en autoclave, caractérisé en ce que la matière contenant des silicates utilisée est une poudre de quartz d'une surface spécifique selon BET d'au moins 3 m²/g, en particulier de 4 à 5 m²/g environ, le mélange cru étant réalisé, en fonction de la surface totale des matières solides, avec un rapport pondéral eau/solides (sans la mousse) d'au moins 1,25 à environ 1,85 et, compte tenu de la conversion pratiquement intégrale de la poudre de quartz et des aluminates réactifs, avec une quantité sensiblement stoéchiométrique d'hydrate de chaux à surface spécifique selon BET d'au moins 15 m²/g, les pièces crues formées dans les moules étant démoulées dès que leur solidification le permet, mais en conservant un fond de leur moule et restant placées sur ce fond, sont cuites à l'autoclave pour donner des pièces moulées d'une masse volumique inférieure à 250 Kg/cm³.

2. Procédé selon la revendication 1, caractérisé en ce que la poudre de quartz est utilisée avec une granulométrie maximale de 20 µm, en particulier d'environ 10 µm.

3. Procédé selon la revendication 1 ou 2, caractérisé en ce que la poudre de quartz est utilisée avec une granulométrie moyenne de 2 à 3 µm.

4. Procédé selon l'une des revendications 1 à 3, caractérisé en ce que le ciment rapide est utilisé en une quantité de 15 à 25 % en poids de la matière solide.

5. Procédé selon l'une des revendications 1 à 4, caractérisé en ce que le rapport entre l'hydrate de chaux et la poudre de quartz est de 1,1 à 1,4, de préférence d'environ 1,2.

6. Procédé selon l'une des revendications 1 à 5, caractérisé en ce qu'en tant que mousse, on utilise une mousse d'un produit tensioactif ou notamment une mousse de protéine.

7. Procédé selon la revendication 6, caractérisé en ce que l'on utilise une mousse de masse volumique brute d'environ 60 à 80 Kg/m³.

8. Procédé selon la revendication 6 ou 7, caractérisé en ce que l'on utilise une mousse dont le diamètre moyen des pores se situe entre 50 et 300 µm.

9. Procédé selon l'une des revendications 1 à 8, caractérisé en ce que l'on ajoute au mélange cru un stabilisateur, de préférence en une quantité allant jusqu'à environ 0,2 % en poids dudit mélange cru.

10. Procédé selon l'une des revendications 1 à 9, caractérisé en ce que, avant le chauffage, le vide est fait à l'intérieur de l'autoclave.

11. Procédé selon l'une des revendications 1 à 10, caractérisé en ce que la phase de préchauffage des pièces crues se trouvant à l'intérieur de l'autoclave est pilotée de manière à obtenir un gradient de température aussi plat que possible entre l'extérieur des pièces crues et l'intérieur de celles-ci.

12. Procédé selon la revendication 11, caractérisé en ce que la phase de chauffage est mise en oeuvre en utilisant une rampe de chauffage à au moins deux allures.

13. Matériau calorifuge constitué d'une ossature fixée par hydrosilicate de calcium, caractérisé par une masse volumique brute inférieure à 250 kg/m³, en particulier inférieure à 180 kg/m³, et une ossature constituée essentiellement de Tobermorite dont les pores présentent un diamètre moyen entre 50 et 300 µm.

14. Matériau calorifuge selon la revendication 13, caractérisé en ce que l'épaisseur minimale des parois entre les pores de l'ossature est comprise essentiellement entre 2 et 5 µm.

15. Matériau calorifuge selon la revendication 13 ou 14, caractérisé par une porosité globale inférieure à 90 % en volume.
